# EUROPÄISCHE PATENTSCHRIFT

(11) **EP 1 634 344 B1**
(45) Veröffentlichungstag und Bekanntmachung des Hinweises auf die Patenterteilung: **04.06.2008**
(21) Anmeldenummer: 04727219.0
(22) Anmeldetag: 14.04.2004
(51) Int. Cl.: H01M 2/04, H01M 2/06, H01M 2/08

(54) **AKKUMULATOR UND VERFAHREN ZUR HERSTELLUNG EINER DICHTEN KONTAKTKLEMMENDURCHFÜHRUNG**
BATTERY AND METHOD FOR PRODUCING A SEALED CONTACT TERMINAL BUSHING
ACCUMULATEUR ET PROCEDE DE REALISATION D'UN PASSAGE DE BORNE DE CONTACT ETANCHE

(30) Priorität: 14.06.2003 DE 10326906
(43) Veröffentlichungstag der Anmeldung: 15.03.2006
(73) Patentinhaber: VARTA Automotive Systems GmbH, 30417 Hannover (DE)
(72) Erfinder: BECHTHOLD, Dieter, 61118 Bad Vilbel (DE); PELZ, Kai, 31832 Springe (DE); JOSWIG, Ralf, 29690 Buchholz (DE)
(74) Vertreter: Gerstein, Hans Joachim
(86) Internationale Anmeldenummer: PCT/DE2004/000767
(87) Internationale Veröffentlichungsnummer: WO 2004/114436

(56) Entgegenhaltungen:
- WO-A-02/055287
- DE-A1- 19 916 786
- GB-A- 2 026 761
- US-A- 5 893 959
- US-A1- 2001 023 038
- US-B1- 6 444 946

## Beschreibung

Die Erfindung betrifft einen Akkumulator mit mindestens einer Zelle in einem Gehäuse und mit Kontaktelementen, die mit mindestens einer Zelle elektrisch verbunden und durch eine Gehäusewand geführt sind, wobei die Kontaktelemente jeweils mit einem Kunststoffdichtungselement umspritzt sind und die Kunststoffdichtungslemente jeweils eine auf der Gehäusewand flächig aufliegende Auflagefläche haben.

Die Erfindung betrifft weiterhin ein Verfahren zur Herstellung einer dichten Kontaktklemmendurchführung bei Akkumulatoren, wobei die Kontaktklemmen mit mindestens einer Zelle elektrisch verbunden und durch eine Gehäusewand geführt werden.

Aus der DE 28 33 416 B1 und der EP 0 105 416 B1 sind gas- und flüssigkeitsdichte Polabdichtungen für Akkumulatoren bekannt, bei denen die zur Kontaktierung der Zellen eingesetzten Polbolzen mit einem Körper aus thermoplastischen Kunststoff umspritzt sind. Der Körper wird mit dem Gehäusedeckel des Akkumulators in Kontakt gebracht und im Spiegelschweißverfahren verschweißt, so dass ein umlaufender Schweißrand an der Außennaht zwischen Körper und Deckel ausgebildet wird. Anstelle des Spiegelschweißverfahrens werden auch Ultraschallschweißverfahren oder Reibschweißverfahren vorgeschlagen.

Diese Polabdichtungen sind für Bleiakkumulatoren geeignet, nicht hingegen für Nickelmetallhydrid (NiMH) und Lithium-lonen-Batterien aufgrund der verwendeten Werkstoffe (z.B. Nickel, Aluminium, Kupfer, Stahl).

US 2001/0023038 A1 offenbart einen Akkumulator, bei dem eine Unterlegscheibe mit Elektrodenfahnen durchsicht-laser-verschweißt wird. Hierbei wird eine Metall-MetallVerbindung hergestellt und ausgenutzt, dass beispielsweise Nickel, Kupfer oder Nickel-Kupfer-Legierungen für Laserlicht transparent sind.

US 5,893,959 A beschreibt das Laserschweißen von Werkstücken allgemein und insbesondere das Verschweißen eines Gehäuses für einen elektrischen Schalter. Die beiden zu verbindenden Werkstücke haben unterschiedliche Transmissions- und Absorptionskoeffizienten für das Spektrum des Laserstrahls.

Aufgabe der Erfindung ist daher, einen verbesserten Akkumulator, insbesondere einen Nickelmetallhydrid- oder Lithium-lonen- Akkumulator, mit mindestens einer Zelle in einem Gehäuse und mit Kontaktelementen zu schaffen, wobei die Kontaktelemente dicht durch eine Gehäusewand geführt sind.

Die Aufgabe wird mit dem gattungsgemäßen Akkumulator erfindungsgemäß dadurch gelöst, dass die Auflagefläche als erstes Schweißteil mit der unmittelbar daran angrenzenden Gehäusewand als zweites Schweißteilmit einer um das Kontaktelement umlaufenden Schweißnaht auf der Kontaktfläche zwischen Auflagefläche und Gehäusewand Durchlicht-Laserverschweißt ist und eines der beiden Schweißteile für den Laserstrahl mindestens teilweise transparent und das andere Schweißteil laserlichtabsorbierend ist, so dass ein Schweißteil bei Durchstrahlen des angrenzenden anderen Schweißteils mit einem Laserstrahl und Absorption an dem Schweißteil die Auflagefläche mit der Gehäusewand verschweißbar ist.

Mit Hilfe des grundsätzlich beispielsweise aus der DE 199 16 786 A1 bekannten Durchlicht-Laserverschweißverfahrens zur Verbindung von stehenden Rohr- und/oder Wandelementen aus lasertransparenten bzw. laserabsorbierenden Kunststoff ist es möglich, mit geringst möglichem Wärmeeintrag eine berührungslose, verschleißfreie Verbindung zwischen Kunststoffdichtungselement und Gehäusewand herzustellen. Das Durchlicht-Laserschweißverfahren erfordert nur kurze Verfahrenszeiten und ist damit relativ schnell. Zudem sind die Werkzeugkosten gering und das Durchlicht-Laserschweißverfahren bietet eine hohe Flexibiltät in der Fertigung.

Das Verschweißen der Auflagefläche des Kunststoffdichtungselementes mit der Gehäusewand mit einer Schweißnaht auf der Kontaktfläche zwischen Auflagefläche und Gehäusewand anstelle der beim herkömmlichen Spiegelschweißen erzeugten Schweißnaht an der Außenkante hat zudem den Vorteil, dass kein Totraum erforderlich ist und das Verschweißen von Kunststoffdichtungselement mit der Gehäusewand aus fertigungstechnischen Gründen erst durch das Durchlicht-Laserschweißverfahren möglich wird.

Vorteilhaft ist es, wenn die Kontaktelemente umlaufende Vorsprünge an ihrem Umfang haben und das Kunststoffdichtungselement die Vorsprünge vollständig umschließt. Auf diese Weise wird eine im Vergleich zum Umspritzen eines glatten Kontaktelementes verbesserte Gas- und Flüssigkeitsdichtigkeit erreicht. Alternativ oder zusätzlich hierzu können die Kontaktelemente auch umlaufende Vertiefungen an ihrem Umfang haben, wobei das Kunststoffdichtungselement die Vertiefungen vollständig ausfüllt, nachdem dieses um das Kontaktelement im Bereich der Vorsprünge und/oder Vertiefungen gespritzt ist.

Zur Verbesserung der Absorptionseigenschaften hat die Auflagefläche des Kunststoffdichtungselementes und/oder die Gehäusewand im Bereich der zugeordneten Auflagefläche vorzugsweise Zuschlags- oder Füllstoffe. Alternativ oder zusätzlich hierzu kann auch eine Laserlicht absorbierende Farbschicht zur Verbesserung der Absorptionseigenschaften auf der Auflagefläche und/oder auf der an die Auflagefläche unmittelbar anstoßenden Oberfläche der Gehäusewand vorgesehen sein.

Beim Durchstrahlen der laserlichtransparenten Gehäusewand wird das Laserlicht an der laserlichtabsorbierenden Auflagefläche des Kunststoffdichtungselementes absorbiert und ggf. teilweise reflektiert, so dass die Auflagefläche erwärmt wird und mit der angrenzenden Gehäusewand verschmilzt.

Die Absorption des Laserstrahls kann aber auch an der Grenzfläche der Gehäusewand zum Kunststoffdichtungselement erfolgen, so dass die ganze Fläche der Gehäusewand erwärmt wird.

Besonders vorteilhaft ist es, wenn das Kunststoffdichtungselement Nuten zur Aufnahme der Gehäusewand hat. Das Kunststoffdichtungselement kann dann im Bereich eines Durchgangs der Gehäusewand mit den Nuten flüssigkeitsdicht auf die Gehäusewand geklemmt werden. Diese Ausführungsform ist insbesondere für Zellenverbinder geeignet, die von einer Zelle durch eine Zwischenwand zur angrenzenden Zelle geführt sind. Ein Verschweißen der Nuten mit der Gehäusewand ist dabei nicht unbedingt erforderlich. Die Nuten können daher vorteilhaft in den Bereichen eingesetzt werden, die bei der Fertigung für das Durchlicht-Laserschweißverfahren nicht zugänglich sind.

Die Kontaktelemente sind vorzugsweise Polbolzen, die durch einen Gehäuse-deckel nach außen geführt werden, oder Zellenverbinder, die zur Verbindung benachbarter Zellen durch eine Zwischenwand des Batteriegehäuses geführt werden.

Aufgabe der Erfindung ist es weiterhin ein verbessertes Verfahren zur Herstellung einer dichten Kontaktklemmendurchführung bei oben beschriebenen Akkumulatoren zu schaffen.

Die Aufgabe wird mit den Schritte gelöst von:
- Umspritzen der Kontaktklemmen mit einem Kunststoffdichtungselement, wobei das Kunststoffdichtungselement eine auf die Gehäusewand flächig auflegbare Auflagefläche hat,
- Anlegen der Auflagefläche des Kunststoffdichtungselementes an die Gehäusewand,
- Durchlicht-Laserschweißen der Auflagefläche an die unmittelbar angrenzende Gehäusewand mit einem Laserstrahl, der durch die mindestens teilweise transparente Gehäusewand auf die derart absorbierende Auflagefläche trifft, dass die Auflagefläche mit der angrenzenden Gehäusewand verschweißt wird, wobei die Schweißnaht um das Kontaktelement umläuft und an der Kontaktfläche zwischen Auflagefläche und Gehäusewand liegt.

Erfindungsgemäß wird somit bei einer herkömmlichen mit einem Kunststoffdichtungselement umspritzten Kontaktklemmendurchführung das an der Gehäusewand anliegende Kunststoffdichtungselement mit einem Durchlicht-Laserschweißverfahren angeschweißt. Dabei wird das Laserlicht durch die mindestens teilweise transparente Gehäusewand auf eine laserlichtabsorbierende Auflagefläche geführt. Durch die Absorption und ggf. teilweisen Reflexion des Laserlichts erwärmt sich die Auflagefläche, so dass die Auflagefläche mit der angrenzenden Gehäusewand an der Kontaktfläche zwischen Auflagefläche und Gehäusewand verschweißt wird.

Zur Verbesserung der Absorptionseigenschaften können Zuschlags- oder Füllstoffe in das Kunststoffmaterial vor dem Umspritzen der Kontaktklemmen eingebracht werden. Es ist aber auch möglich, eine Laserlicht absorbierende Farbschicht auf die Auflagefläche und/oder die zur Anlage auf die Auflagefläche vorgesehene Oberfläche der Gehäusewand aufzubringen, um die Absorptionseigenschaften zu verbessern.

Vor allem zur flüssigkeitsdichten Montage der Kontaktklemmendurchführung an die Gehäusewand an Stellen, die für das Durchlicht-Laserschweißverfahren nicht zugänglich sind, ist es vorteilhaft, Nuten in das Kunststoffdichtungselement einzubringen und das Kunststoffdichtungselement mit den Nuten auf die Gehäusewand aufzuklemmen. Im Bereich der Nuten ist eine weitere Verschweißung dann nicht mehr unbedingt erforderlich.

Die Erfindung wird nachfolgend anhand der beigefügten Zeichnungen beispielhaft näher erläutert. Es zeigen:
- Figur 1 -: eine perspektivische Ansicht eines Akkumulators mit Kunststoffgehäuse und aus dem Kunststoffgehäuse geführten Polbolzen;
- Figur 2 -: eine Schnittansicht durch einen Ausschnitt des Akkumulators aus Figur 1.

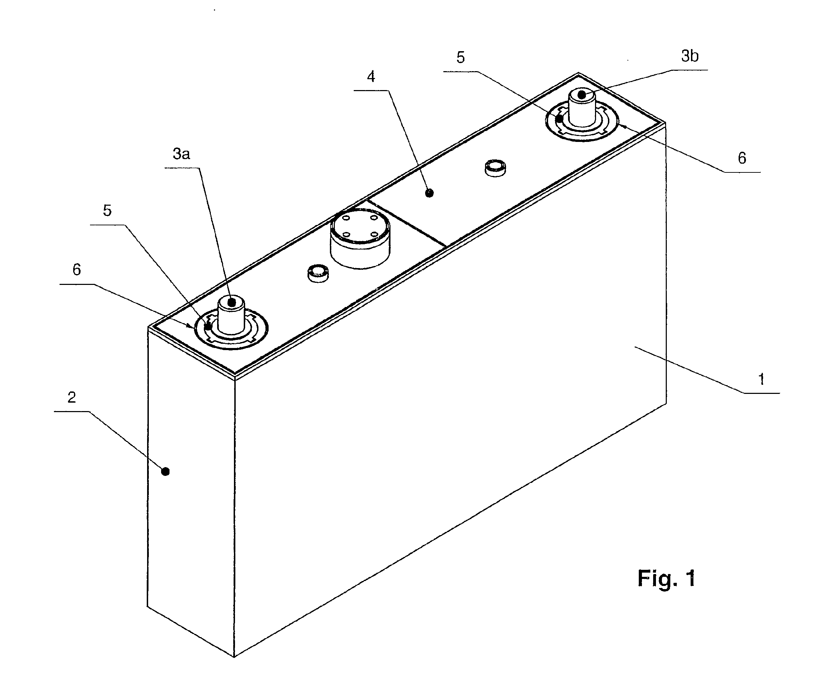

Die Figur 1 lässt einen Akkumulator 1 mit einem flüssigkeits- und gasdichtverschlossenen Gehäuse 2 aus Kunststoff erkennen, durch den Polbolzen 3a, 3b zum elektrischen Anschluss des Akkumulators 1 geführt sind. Die Polbolzen 3a, 3b ragen durch den Gehäusedeckel 4 des Kunststoffgehäuses 2 hindurch und aus diesem hervor. Sie sind mit einem Kunststoffdichtungselement 5 umspritzt, das teilweise durch eine Bohrung in dem Gehäusedekkel 4 nach außen geführt ist.

Erfindungsgemäß sind die Kunststoffdichtungselemente 5 mit einem Durchlicht-Laserschweißverfahren an den Gehäusedeckel 4 verschweißt, indem ein Laserstrahl durch den mindestens teilweise für Laserlicht transparenten Gehäusedeckel 4 geleitet wird, der auf die an dem Gehäusedeckel 4 anliegende Auflagefläche des Kunststoffdichtungselementes 5 auftrifft. Diese Auflagefläche des Kunststoffdichtungselementes 5 ist laserlichtabsorbierend, so dass Wärme erzeugt wird, die die Auflagefläche des Kunststoffdichtungselementes 5 aufschmilzt und mit dem Gehäusedeckel 4 verschweißt. Die auf diese Weise hergestellte Schweißnaht 6 befindet sich auf der Kontaktfläche zwischen der Auflagefläche des Kunststoffdichtungselementes 5 und dem Gehäusedeckel 4 und verläuft nahtlos umlaufend um die Polbolzen 3a bzw. 3b. Zur Herstellung dieser Schweißnaht 6 wird der Gehäusedeckel 4 beispielsweise mittels einer Spannvorrichtung auf das Kunststoffdichtungselement 5 gedrückt, so dass ein Kontakt zwischen Auflagefläche und Gehäusedeckel 4 während des Durchlicht-Laserschweißens sichergestellt ist.

Um eine ausreichende Absorption der Kontaktfläche sicherzustellen, kann das Kunststoffdichtungselement 5 insbesondere an der Auflagefläche entsprechende Zuschläge oder Füllstoffe haben. Es ist aber auch denkbar, durch Farbauftrag vorzugsweise mit einer Laserlicht absorbierenden Farbschicht die Absorptions- und ggf. Reflexionseigenschaften der Kontaktfläche zwischen der Auflagefläche des Kunststoffdichtungselementes 5 und der Gehäusewand, wie zum Beispiel des Gehäusedeckels 4 zu erhöhen.

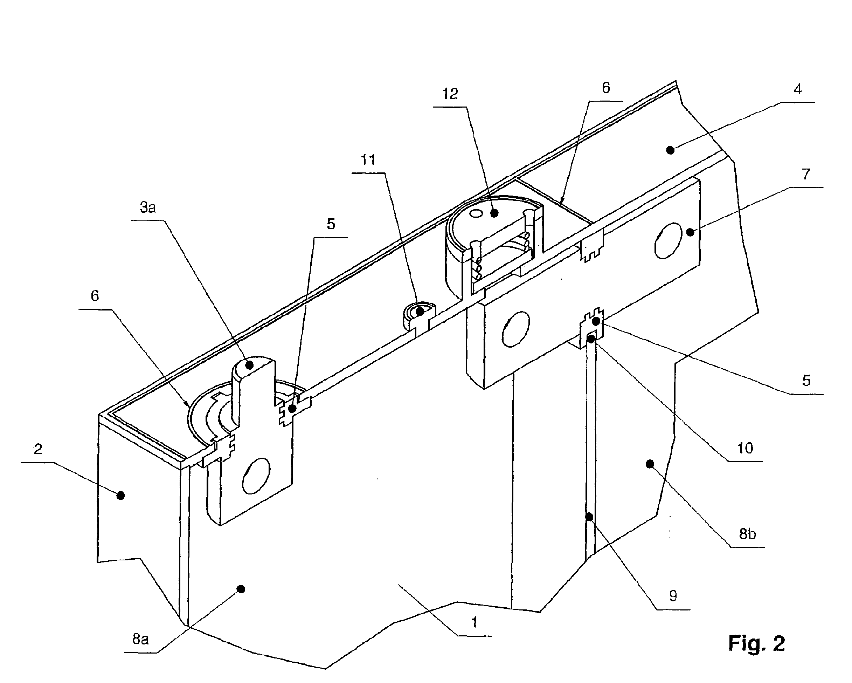

Die Figur 2 lässt eine Schnittansicht durch einen Ausschnitt des Akkumulators 1 aus der Figur 1 erkennen. Es wird deutlich, dass das Kunststoffdichtungselement 5 um den Umfang des Polbolzens 3 flüssigkeits- und gasdicht gespritzt ist. Hierbei sind an dem Umfang des Polbolzens 3 Vertiefungen in Form von umlaufenden Nuten vorgesehen, die von dem Kunststoffdichtungselement 5 vollständig ausgefüllt sind. Das Kunststoffdichtungselement 5 hat eine Flansch mit einer Auflagefläche, die flächig auf der Innenseite des Gehäusedeckels 4 aufliegt. Im Bereich des Flansches wird das Kunststoffdichtungselement 5 mit einer nahtlos umlaufenden Schweißnaht 6 mit dem Gehäusedeckel 4 mit Hilfe eines Durchlicht-Laserschweißverfahrens verbunden. Auf diese Weise wird eine flüssigkeits- und gasdichte Durchführung des Polbolzens 3 durch den Gehäusedeckel 4 gewährleistet.

Weiterhin ist erkennbar, dass ein Zellenverbinder 7 zur elektrischen Verbindung zur linken Zelle 8a und rechten Zelle 8b vorgesehen ist. Dieser Zellenverbinder 7 wird durch eine Zwischenwand 9 geführt, die einen Durchgang für den Zellenverbinder 7 aufweist. Der Zellenverbinder 7 ist mit einem Kunststoffdichtungselement 5 umspritzt, wobei ebenfalls zusätzliche Vertiefungen bzw. Nuten vorgesehen sind, die von dem Kunststoffdichtungselement 5 vollständig ausgefüllt werden.

An den Seitenkanten und der Unterkante des Kunststoffdichtungselementes 5 ist eine Nut 10 vorgesehen, um das Kunststoffdichtungselement 5 flüssigkeitsdicht auf die Zwischenwand 9 aufzuklemmen. Eine zusätzliche Verschweißung ist dann im Bereich der Nut 10 nicht mehr erforderlich. Das Kunststoffdichtungselement 5 wird lediglich an der Auflagefläche zum Gehäusedeckel 4 mit Hilfe des Durchlicht-Laserschweißverfahrens verschweißt.

Die Zellenverbinder 7 können einteilig oder mehrteilig sein. Die Kontaktierung der Zellenverbinder 7 kann mit lösbaren oder starren Verfahren in bekannter Weise erfolgen, wie beispielsweise mit Schrauben, Nieten, Schweißen, Clinchen, Pressen oder Durchsetzfügen.

Weiterhin können in dem Gehäusedeckel 4 in bekannter Weise Füllöffnungen 11 und Ventilöffnungen 12 vorgesehen sein. Auch diese Füll- und Ventilöffnungen 11, 12 können vorteilhaft mit Durchstrahlung laserverschweißt werden.

## Patentansprüche

1. Akkumulator (1) mit mindestens einer Zelle (8a, 8b) in einem Gehäuse (2) und mit Kontaktelementen (3, 7), die mit mindestens einer Zelle (8a, 8b) elektrisch verbunden und durch eine Gehäusewand (4, 9) geführt sind, wobei die Kontaktelemente (3, 7) jeweils mit einem Kunststoffdichtungselement (5) umspritzt sind und die Kunststoffdichtungselemente (5) jeweils eine auf der Gehäusewand (4, 9) flächig aufliegende Auflagefläche haben, **dadurch gekennzeichnet, dass** die Auflagefläche als erstes Schweißteil mit der unmittelbar daran angrenzenden Gehäusewand (4, 9) als zweites Schweißteil mit einer um das Kontaktelement (3, 7) umlaufenden Schweißnaht an der Kontaktfläche zwischen Auflagefläche und Gehäusewand (4, 9) Durchlicht-Laserverschweißt ist und eines der beiden Schweißteile für den Laserstrahl mindestens teilweise transparent und das andere Schweißteil für das Laserlicht absorbierend ist, so dass die Auflagefläche beim Durchstrahlen des angrenzenden anderen Schweißteils mit einem Laserstrahl und Absorption an der Auflagefläche mit der Gehäusewand (4, 9) verschweißbar ist.

2. Akkumulator (1) nach Anspruch 1, **dadurch gekennzeichnet, dass** die Kontaktelemente (3, 7) umlaufende Vorsprünge an ihrem Umfang haben und das Kunststoffdichtungselement (5) die Vorsprünge vollständig umschließt.

3. Akkumulator (1) nach Anspruch 1 oder 2, **dadurch gekennzeichnet, dass** die Kontaktelemente (3, 7) umlaufende Vertiefungen an ihrem Umfang haben und das Kunststoffdichtungselement (5) die Vertiefungen vollständig ausfüllt.

4. Akkumulator (1) nach einem der vorhergehenden Ansprüche, **dadurch gekennzeichnet, dass** die Auflagefläche des Kunststoffdichtungselementes (5) und/oder die Gehäusewand (4, 9) im Bereich der zugeordneten Auflagefläche Zuschlags- oder Füllstoffe zur Verbesserung der Absorptionseigenschaften hat.

5. Akkumulator (1) nach einem der vorhergehenden Ansprüche, **dadurch gekennzeichnet, dass** die Auflagefläche und/oder die an die Auflagefläche unmittelbar anstoßende Oberfläche der Gehäusewand (4, 9) eine Laserlicht absorbierende Farbschicht zur Verbesserung der Absorptionseigenschaften hat.

6. Akkumulator (1) nach einem der vorhergehenden Ansprüchen, **dadurch gekennzeichnet, dass** die Kontaktelemente (3, 7) Nuten zur Aufnahme der Gehäusewand (4, 9) haben und die Kontaktelemente (3, 7) im Bereich eines jeweiligen Durchgangs der Gehäusewand (4, 9) mit den Nuten flüssigkeitsdicht auf die Gehäusewand (4, 9) geklemmt sind.

7. Akkumulator (1) nach einem der vorhergehenden Ansprüche, **dadurch gekennzeichnet, dass** die Kontaktelemente (3, 7) Polbolzen (3) oder Zellenverbinder (7) sind.

8. Verfahren zur Herstellung einer dichten Kontaktklemmendurchführung bei Akkumulatoren (1), wobei die Kontaktklemmen (3, 7) mit mindestens einer Zelle (8a, 8b) elektrisch verbunden und durch eine Gehäusewand (4, 9) geführt werden, mit den Schritten:
- Umspritzen der Kontaktklemmen (3, 7) mit einem Kunststoffdichtungselement (5), wobei das Kunststoffdichtungselement (5) eine auf die Gehäusewand (4, 9) flächig auflegbare Auflagefläche hat,
- Anlegen der Auflagefläche des Kunststoffdichtungselementes (5) an die Gehäusewand (4, 9),
- Durchlicht-Laserschweißen der Auflagefläche an die unmittelbar angrenzende Gehäusewand (4, 9) mit einem Laserstrahl, der durch die mindestens teilweise transparente Gehäusewand (4, 9) auf die derart reflektierende Auflagefläche trifft, dass die Auflagefläche mit der angrenzenden Gehäusewand (4, 9) verschweißt wird, wobei die Schweißnaht um das Kontaktelement (3, 7) umläuft und an der Kontaktfläche zwischen Auflagefläche und Gehäusewand (4, 9) liegt.

9. Verfahren nach Anspruch 8, **gekennzeichnet durch** Einbringen von Zuschlags- oder Füllstoffen in das Kunststoffmaterial für das Kunststoffdichtungselement (5) zur Verbesserung der Absorptionseigenschaften.

10. Verfahren nach Anspruch 8 oder 9, **gekennzeichnet durch** Aufbringen einer Laserlicht absorbierende Farbschicht auf die Auflagefläche und/oder die zur Anlage an die Auflagefläche vorgesehene Oberfläche der Gehäusewand (4, 9) zur Verbesserung der Absorptionseigenschaften.

11. Verfahren nach einem der Ansprüche 8 bis 10, **gekennzeichnet durch** Einbringen von Nuten in das Kunststoffdichtungselement (5) zur Aufnahme der Gehäusewand (4, 9) und flüssigkeitsdichtes Aufklemmen des Kunststoffdichtungselementes (5) im Bereich eines Durchgangs der Gehäusewand (4, 9) mit den Nuten auf die Gehäusewand (4, 9).

## Claims

1. A rechargeable battery (1) having at least one cell (8a, 8b) in a housing (2), and having contact elements (3, 7) which are electrically connected to at least one cell (8a, 8b) and are passed through a housing wall (4, 9), with each of the contact elements (3, 7) being extrusion-coated with a plastic sealing element (5), and the plastic sealing elements (5) each having a supporting surface which lies flat on the housing wall (4, 9) **characterized in that** the supporting surface is transmission laser-welded as a first welded part to the housing wall (4, 9) which is directly adjacent to it, and has a second welded part by means of a weld bead, which is circumferential around the contact element (3, 7) on the contact surface between the supporting surface and the housing wall (4, 9), and one of the two welded parts is at least partially transparent for the laser beam and the other welded part is absorbent for the laser light, so that the supporting surface can be welded by means of a laser beam and absorption on the supporting surface to the housing wall (4, 9) as the laser beam passes through the other adjacent welded part.

2. The rechargeable battery (1) as claimed in claim 1, **characterized in that** the contact elements (3, 7) have circumferential projections on their circumference, and the plastic sealing element (5) completely surrounds the projections.

3. The rechargeable battery (1) as claimed in claim 1 or 2, **characterized in that** the contact elements (3, 7) have circumferential depressions on their circumference, and the plastic sealing element (5) completely fills the depressions.

4. The rechargeable battery (1) as claimed in one of the preceding claims, **characterized in that** the supporting surface of the plastic sealing element (5) and/or the housing wall (4, 9) have/has additives or fillers in order to improve the absorption characteristics in the area of the associated supporting surface.

5. The rechargeable battery (1) as claimed in one of the preceding claims, **characterized in that** the supporting surface and/or that surface of the housing wall (4, 9) which abuts directly onto the supporting surface has a colored layer, which absorbs laser light, in order to improve the absorption characteristics.

6. The rechargeable battery (1) as claimed in one of the preceding claims, **characterized in that** the contact elements (3, 7) have grooves for holding the housing wall (4, 9), and the contact elements (3, 7) are clamped to the housing wall (4, 9) in a liquid-tight manner by means of the grooves in the area of each aperture through the housing wall (4, 9).

7. The rechargeable battery (1) as claimed in one of the preceding claims, **characterized in that** the contact elements (3, 7) are pole bolts (3) or cell connectors (7).

8. A method for production of a sealed contact terminal bushing for rechargeable batteries (1), with the contact terminals (3, 7) being electrically connected to at least one cell (8a, 8b) and being passed through a housing wall (4, 9), having the following steps:
- extrusion coating of the contact terminals (3, 7) with a plastic sealing element (5) with the plastic sealing element (5) having a supporting surface which can rest flat on the housing wall (4, 9).
- application of the supporting surface of the plastic sealing element (5) to the housing wall. (4, 9),
- transmission laser welding of the supporting surface to the immediately adjacent housing wall (4, 9) by means of a laser beam, which strikes the supporting surface through the at least partially transparent housing wall (4, 9), which supporting surface is reflective such that it is welded to the adjacent housing wall (4, 9), with the weld bead running around the contact element (3, 7) and lying on the contact surface between the supporting surface and the housing wall (4, 9).

9. The method as claimed in claim 8, **characterized by** introduction of additives or fillers into the plastic material for the plastic sealing element (5) in order to improve the absorption characteristics.

10. The method as claimed in claim 8 or 9, **characterized by** application of a colored layer, which absorbs laser light, to the supporting surface and/or that surface of the housing wall (4, 9) which is intended to make contact with the supporting surface, in order to improve the absorption characteristics.

11. The method as claimed in one of claims 8 to 10, **characterized by** introduction of grooves into the plastic sealing element (5) in order to hold the housing wall (4, 9) and liquid-tight clamping of the plastic sealing element (5) to the housing wall (4, 9), by means of the grooves, in the area of an aperture through the housing wall (4, 9).

## Revendications

1. Accumulateur (1) comportant au moins une cellule (8a, 8b) dans un boîtier (2) ainsi que des éléments de contact (3, 7) reliés électriquement à au moins une cellule (8a, 8b) en traversant une paroi (4, 9) du boîtier, les éléments de contact (3, 7) sont enrobés par injection chacun d'un élément d'étanchéité en matière plastique (5) et les éléments d'étanchéité en matière plastique (5) ont une surface d'appui qui s'applique à plat contre la paroi de boîtier (4, 9),
**caractérisé en ce que**
la surface d'appui est le premier partenaire de soudage, la paroi de boîtier (4, 9) directement adjacente constituant le second partenaire de soudage, par un cordon de soudure périphérique entourant l'élément de contact (3, 7) sur la surface de contact entre la surface d'appui et la paroi de boîtier (4, 9) soudée par un soudage traversant par faisceau laser, et
l'un des deux partenaires de soudage est au moins partiellement transparent au faisceau laser et l'autre partenaire de soudage absorbe la lumière laser de façon que la surface d'appui, soit soudée contre la paroi de boîtier (4, 9) par le faisceau laser traversant l'autre partenaire de soudage adjacent, pour être absorbé au niveau de la surface d'appui.

2. Accumulateur (1) selon la revendication 1,
**caractérisé en ce que**
les éléments de contact (3, 7) ont à leur périphérie des parties en saillie périphériques et l'élément d'étanchéité en matière plastique (5) entoure complètement les parties en saillie.

3. Accumulateur (1) selon l'une quelconque des revendications 1 ou 2,
**caractérisé en ce que**
les éléments de contact (3, 7) ont des cavités périphériques à leur périphérie et l'élément d'étanchéité en matière plastique (5) remplit complètement les cavités.

4. Accumulateur (1) selon l'une quelconque des revendications précédentes,
**caractérisé en ce que**
la surface d'appui de l'élément d'étanchéité en matière plastique (5) et/ ou la paroi de boîtier (4, 9) comportent dans la région de la surface d'appui associée, des agrégats ou des matières de remplissage pour améliorer les caractéristiques d'absorption.

5. Accumulateur (1) selon l'une quelconque des revendications précédentes,
**caractérisé en ce que**
la surface d'appui et/ou la surface supérieure de la paroi de boîtier (4, 9) venant directement contre la surface d'appui a une couche de couleur absorbant la lumière laser pour améliorer les propriétés d'absorption.

6. Accumulateur (1) selon l'une quelconque des revendications précédentes,
**caractérisé en ce que**
les éléments de contact (3, 7) ont des rainures pour recevoir la paroi de boîtier (4, 9) et dans la région de chaque traversée de la paroi de boîtier (4, 9), les éléments de contact (3, 7) sont encastrés avec les rainures de façon étanche au liquide sur la paroi de boîtier (4, 9).

7. Accumulateur (1) selon l'une quelconque des revendications précédentes,
**caractérisé en ce que**
les éléments de contact (3, 7) ont des goujons polaires (3) ou des connecteurs de cellules (7).

8. Procédé de fabrication d'une traversée de bornes de contact étanches pour des accumulateurs (1), les bornes de contact (3, 7) étant reliées électriquement à au moins une cellule (8a, 8b) pour traverser une paroi de boîtier (4, 9), procédé comprenant les étapes suivantes :
- Enrobage par injection, des bornes de contact (3, 7) avec un élément d'étanchéité en matière plastique (5), cet élément d'étanchéité en matière plastique (5) ayant une surface d'appui venant à plat contre la paroi de boîtier (4, 9),
- Application de la surface d'appui de l'élément d'étanchéité en matière plastique (5) contre la paroi de boîtier (4, 9),
- Soudage par laser avec traversée de lumière de la surface d'appui contre la paroi de boîtier (4, 9) directement adjacente à l'aide d'un faisceau laser qui traverse la paroi de boîtier (4, 9) au moins partiellement transparente et arrive sur la surface d'appui réfléchissante de façon à souder la surface d'appui à la paroi de boîtier (4, 9) adjacente,
- Le cordon de soudure entoure l'élément de contact (3, 7) et s'applique contre la surface de contact entre la surface d'appui et la paroi de boîtier (4, 9).

9. Procédé selon la revendication 8,
**caractérisé par**
l'introduction de matière d'apport ou de charge à la matière plastique de l'élément d'étanchéité en matière plastique (5) pour améliorer ses caractéristiques d'absorption.

10. Procédé selon l'une quelconque des revendications 8 ou 9,
**caractérisé en ce qu'**
on applique une couche de couleur absorbant la lumière laser sur la surface d'appui et/ou sur la surface supérieure de la paroi de boîtier (4, 9) prévue pour venir contre la surface d'appui, pour améliorer les caractéristiques d'absorption.

11. Procédé selon l'une quelconque des revendications 8 à 10,
**caractérisé en ce qu'**
on réalise des rainures dans l'élément d'étanchéité en matière plastique (5) pour recevoir la paroi de boîtier (4, 9) et serrer l'élément d'étanchéité en matière plastique (5) de façon étanche au liquide dans la zone de la traversée de la paroi de boîtier (4, 9) avec les rainures sur la paroi de boîtier (4, 9).
